# Europäisches Patentamt

## European Patent Office
## Office européen des brevets

(19)

(11) Veröffentlichungsnummer: **0 112 796**
**A1**

(12) **EUROPÄISCHE PATENTANMELDUNG**

(21) Anmeldenummer: **83730105.0**

(22) Anmeldetag: **01.11.83**

(51) Int. Cl.³: **G 01 K 7/02**

(30) Priorität: **08.11.82 DE 3241618**

(43) Veröffentlichungstag der Anmeldung: **04.07.84**
Patentblatt **84/27**

(84) Benannte Vertragsstaaten: **BE DE FR GB IT LU NL SE**

(71) Anmelder: **MANNESMANN Aktiengesellschaft, Mannesmannufer 2, D-4000 Düsseldorf 1 (DE)**

(72) Erfinder: **Kloep, Hermann, Am Viadukt 1, D-5533 Hillesheim (DE)**

(74) Vertreter: **Meissner, Peter E., Dipl.-Ing. et al, Herbertstrasse 22, D-1000 Berlin 33 (DE)**

(54) **Elektrische Isolation für eine Steckkontaktvorrichtung zum Übertragen von sehr kleinen elektrischen Spannungen.**

(57) Vorgeschlagen wird die Verwendung einer Polyimid-Formmasse auf Basis glasfaserverstärkter duroplastischer Harze als elektrische Isolation (31) zwischen den Kontakten (26, 27) gegeneinander sowie zwischen den Kontakten und der diese Kontakte umgebenden Hülse (29) einer Steckkontaktvorrichtung zum Übertragen von sehr kleinen elektrischen Spannungen bei hohen mechanischen und thermischen Belastungen.

- 1 -

Bei verschiedenen Meßvorgängen, wie z.B. bei elektrischer Übertragung von an einem warmgängigen metallurgischen Gefäß (Gießpfanne oder Hüttenofen) gemessenen Größen, insbesondere der Temperatur (z.B. deutsche Patentanmeldung P 31 30 465.6), werden sehr kleine elektrische Spannungen bei hohen mechanischen und höheren thermischen Belastungen übertragen, wie sie im metallurgischen Betrieb auftreten.

Die Praxis zeigte, daß bekannte, verhältnismäßig robust gebaute Niederspannungs-Kontaktvorrichtungen den mechanischen und thermischen Belastungen nicht gewachsen waren. Aber auch Versuche mit speziell konstruierten Kontaktvorrichtungen, die auf minimierten Abwandlungen der gängigen Niederspannungs-Kontaktvorrichtungen basierten, konnten bei erhöhten Temperaturen (stellenweise 300°C), nicht bestehen. Bei den zu messenden sehr schwachen Spannungen ergaben sich darüberhinaus Verfälschungen, die eine Übertragung der gemessenen Werte nicht möglich machten. Es wurde gefunden, daß diese Verfälschungen mit der Verwendung von klassischen Isoliermaterialien (z.B. Asbestschiefer) zusammenhängen.

Aufgabe der Erfindung ist es, ein Isoliermaterial für Steckkontaktvorrichtungen zum Übertragen von sehr kleinen elektrischen Spannungen zu finden, welches den hohen mechanischen Belastungen, insbesondere Stoßbelastungen sowie erhöhten Temperaturen widersteht, wobei keine

- 2 -

Spannungsverfälschungen entstehen. Erfindungsgemäß wird als elektrische Isolation zwischen den Kontakten gegeneinander sowie zwischen den Kontakten und der diese Kontakte umgebenden Hülse einer Steckkontaktvorrichtung zum Übertragen von sehr kleinen elektrischen Strömungen bei hohen mechanischen und thermischen Belastungen eine Polyimid-Formmasse auf der Basis glasfaserverstärkter duroplastischer Harze verwendet.

Dieser Werkstoff (bekannt z.B. unter der Handelsbezeichnung "KINEL"), der üblicherweise für Kunststofflager, Gehäuse und dergleichen verwendet wird, besitzt außer den hohen, spezifisch mechanischen Eigenschaften, die bei hohen Temperaturen erhalten bleiben, auch die für den gegebenen Zweck erforderlichen elektrischen Eigenschaften, insbesondere hinsichtlich der Dielektrizitätskonstante. Auch bei höheren Temperaturen (um 300$^{\circ}$C) treten keine Spannungsverfälschungen auf.

In den beigefügten Zeichnungen ist ein Anwendungsbeispiel der Erfindung dargestellt. Es zeigt:

Fig. 1 eine Steckkontaktvorrichtung, eingebaut in einer Temperaturmeßeinrichtung an einer Pfanne zur Aufnahme von Metallschmelze,

Fig. 2 eine Steckkontaktvorrichtung.

- 3 -

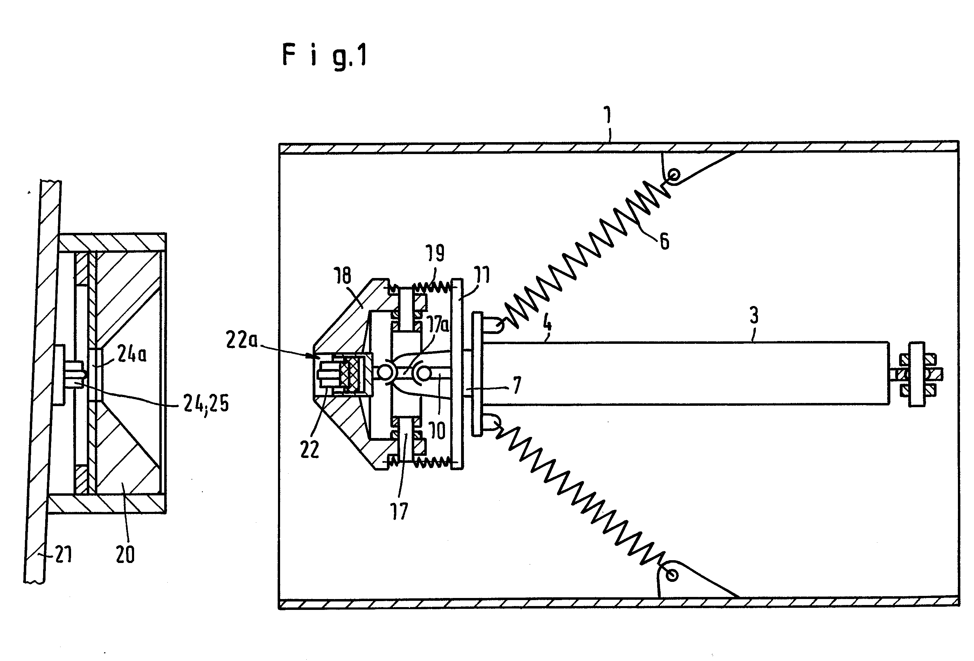

Wie Fig. 1 zeigt, ist in einem zylindrischen Gehäuse
1 ein hydraulischer Zylinder 3 gelenkig gelagert. Das
freie Ende 4 des Zylinders 3 besitzt drei Freiheitsgrade. Dieses Zylinderende 4 ist mit Hilfe von
mehreren radial angeordneten Federn 6 in seiner mittigen Lage im Gehäuse 1 gehalten.

Im Zylinder 3 ist ein doppelwirkender, hohler Differentialkolben 7 axial beweglich angeordnet. Am
abtriebsseitigen Ende des Differentialkolbens 7 ist
ein Flansch 11 senkrecht zur Achse des Kolbens 7 fest
angeordnet. Mit dem Flansch 11 ist über die Gelenke
17 und 17a ein kegelförmiges Kupplungsteil 18 verbunden. Dieses Kupplungsteil 18 ist in der mittleren
Stellung mit Hilfe von Federn 19 gehalten.

Die Kegelform der Funktionsoberfläche des Kupplungsteils 18 entspricht der Form des Gegenstücks, nämlich
eines ortsfesten Kupplungsteils 20, welches am Mantel
der Pfanne fest angeordnet ist.

Im Kupplungsteil 18, in einer axialen Bohrung 22a, ist
ein zweipoliges Kontaktstück 22 verschiebbar angeordnet, welches an die Plugerstange 10 eines im Differentialkolben 7 beweglich angeordneten Plungers angeschlossen ist. Dieses Kontaktstück wirkt mit dem
ortsfesten Anschlußstück 24, 25 zusammen, welches im
Kupplungsteil 20 koaxial angeordnet ist. In der
Achse des Kupplungsteils 20 ist eine Bohrung 24a für
den Steckkontakt 22 angeordnet.

- 4 -

Nach Beaufschlagung des Kolbens 7 bewegt sich der Kupplungsteil 18 in Richtung vom Zylinder 3 weg, bis er mit seinem Kegel in dem ortsfesten Kupplungsteil anliegt. Danach fährt die Plungerstange 10 heraus und bewirkt das Einrasten der zusammenwirkenden Kontaktstücke 22, 23 und 24, 25.

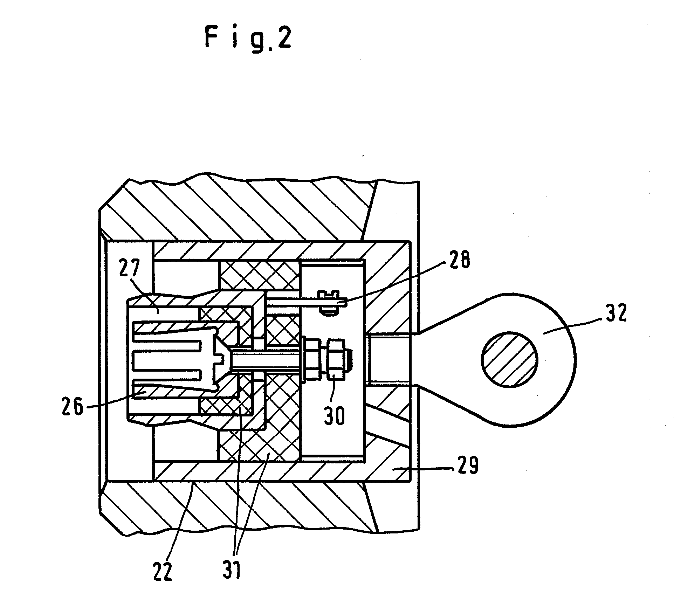

Der Aufbau des Steckkontaktes ist aus Fig. 2 ersichtlich. In der Achse der Kontakthülse 29 ist ein federnder innerer Kontakt 26 angeordnet, der von einem äußeren federnden Kontakt 27 umgeben ist. In dem dargestellten Beispiel sind die beiden Kontakte zylinderförmig. Zwischen dem inneren Kontakt 26 und dem äußeren Kontakt 27 ist eine Isolierbuchse 31 aus einer Polyimid-Formmasse auf der Basis glasfaserverstärkter duroplatischer Harze angebracht. Aus dem gleichen Material ist die Buchse angefertigt, die sich zwischen der Kontakthülse 29 und dem äußeren Kontakt 27 erstreckt. Der äußere Kontakt 27 ist mit einer Stromanschlußfahne 28 fest verbunden. Der innere Kontakt 26 ist in der Isolierbuchse 31 mittels einer Schraube 30 verbunden, die gleichzeitig den zweiten Stromanschluß bildet. In der Kontakthülse 29 ist eine Öse 32 angeschraubt, an der die Betätigungsglieder des beweglichen Kontakts 22 angeschlossen sind.

- 5 -

Zusammenfassung

0112796

BAD ORIGINAL

Patentanspruch:

Verwendung einer Polyimid-Formmasse auf der Basis glasfaserverstärkter duroplastischer Harze als elektrische Isolation zwischen den Kontakten gegeneinander sowie zwischen den Kontakten und der diese Kontakte umgebenden Hülse einer Steckkontaktvorrichtung zum Übertragen von sehr kleinen elektrischen Spannungen bei hohen mechanischen und thermischen Belastungen.

- - - - - - - -

Fig.1

Fig.2

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | US-A-4 313 868 (STANDARD OIL) * Zusammenfassung * | 1 | G 01 K 7/02 |
| D,P Y | DE-A-3 130 465 (MANNESMANN)(Veröffentlicht: 17.02.1983) * Figuren * | 1 | |
| Y | US-A-3 741 816 (E.M. WAGNER) * Spalte 3, Zeilen 43-48; Figuren * | 1 | |
| A | EP-A-0 023 610 (KANEGAFUCHI KAGAKU KOGYO) * Zusammenfassung * | 1 | |
| A | US-A-4 083 617 (BRAD HARRISON CO.) * Zusammenfassung * | 1 | **RECHERCHIERTE SACHGEBIETE (Int. Cl. ³)**<br><br>G 01 K<br>H 01 R<br>C 08 L<br>H 01 B |

Der vorliegende Recherchenbericht wurde für alle Patentansprüche erstellt.

| Recherchenort DEN HAAG | Abschlußdatum der Recherche 20-02-1984 | Prüfer RAMBOER P. |
|---|---|---|